# FASCICULE DE BREVET EUROPEEN

(11) **EP 4 658 891 B1**
(45) Date de publication et mention de la délivrance du brevet: **18.11.2026**
(21) Numéro de dépôt: 24711250.1
(22) Date de dépôt: 23.01.2024
(51) Int. Cl.: F02K 1/12

(54) **VOLET FROID DE TUYERE D'ARRIERE-CORPS**
KALTKLAPPE EINER HECKSEITIGEN DÜSE
COLD FLAP OF AN AFTERBODY NOZZLE

(30) Priorité: 02.02.2023 FR 2300956
(43) Date de publication de la demande: 10.12.2025
(73) Titulaire: Safran Ceramics, 33185 Le Haillan (FR)
(72) Inventeur: CONETE, Eric, 77550 MOISSY-CRAMAYEL (FR)
(74) Mandataire: Cabinet Beau de Loménie
(86) Numéro de dépôt international: PCT/FR2024/050085
(87) Numéro de publication internationale: WO 2024/161077

(56) Documents cités:
- EP-A1- 0 100 697
- EP-A1- 0 595 753
- EP-A1- 1 482 158
- GB-A- 862 405
- US-A- 5 893 518

## Description

### Domaine Technique

La présente invention se rapporte au domaine des tuyères à section variable d'arrière-corps de turboréacteurs. Elle concerne plus particulièrement les volets orientables dont sont munies de telles tuyères.

### Technique antérieure

Un turboréacteur comprend généralement, d'amont en aval dans le sens de l'écoulement des gaz, une soufflante, un ou plusieurs étages de compresseur, une chambre de combustion, un ou plusieurs étages de turbine et un canal d'éjection, dans lequel peut ou non être prévu un dispositif dit de réchauffe ou de postcombustion.

Le canal d'éjection comporte un carter et une tuyère, dans lesquels les gaz de combustion se détendent. Il est commun d'utiliser une tuyère à section variable, le cas échéant avec un dispositif de postcombustion, afin de réguler le débit des gaz éjectés en fonction du régime du turboréacteur.

Dans ce type de turboréacteur, la tuyère à section variable comprend des volets internes ou volets chauds canalisant le flux d'air principal ainsi que des volets externes ou volets froids guidant le flux de refroidissement. Les volets internes sont actionnés directement par des leviers de commande de façon à modifier le profil du flux primaire du moteur de la turbomachine (i.e. la ou les sections d'éjection selon qu'il s'agit d'un simple convergent ou d'une tuyère convergente/divergente). De manière à synchroniser les mouvements des volets externes sur celui des volets internes, une biellette relie chaque volet externe au levier de commande des volets internes.

Les volets externes sont généralement constitués d'un caisson interne permettant de rigidifier le volet et d'intégrer les éléments de cinématique du volet, tels que des chapes, et d'un voile supérieur permettant de fermer le caisson et d'assurer la veine aérodynamique. Le caisson et le voile sont assemblés ensemble par des rivets métalliques. Le document US 7 533 533 divulgue une tuyère à section variable équipée de volets externes. Le document EP 100 697 A1 divulgue un volet externe de tuyère à section variable connu dans l'art.

Ce type d'architecture de volet externe n'est pas optimisé en ce qui concerne sa masse globale. Or, il est important de maîtriser la masse des volets de la tuyère à section variable car elle est très éloignée du centre de gravité de l'avion et impacte, par conséquent, sa manœuvrabilité.

### Exposé de l'invention

Il est donc souhaitable de pouvoir proposer une solution permettant de réduire la masse des volets externes ou froids dans une tuyère à section variable d'arrière-corps de turboréacteur tout en respectant les exigences de performances et d'intégration dans la tuyère.

A cet effet, la présente invention propose un volet externe ou volet froid de tuyère à section variable d'arrière-corps de moteur aéronautique comprenant un corps de volet s'étendant suivant une direction longitudinale entre un bord amont et un bord aval délimitant un bord de fuite de la tuyère d'arrière-corps et suivant une direction transversale entre des première et deuxième bords transversaux, le corps de volet comprenant une première portion s'étendant suivant la direction axiale entre le bord aval et une position intermédiaire comprise entre les bords amont et aval dudit corps de volet,
caractérisé en ce que le corps de volet comprend en outre une deuxième portion s'étendant suivant la direction axiale entre la position intermédiaire et le bord aval du corps de volet, en ce que la deuxième portion présente en section transversale une forme générale en oméga définissant un raidisseur dans la partie centrale de la deuxième portion et des première et deuxième parties aplaties adjacentes au raidisseur, et en ce qu'une barrette de rigidification est fixée sur lesdites première et deuxième parties aplaties du côté de la face interne du corps de volet, ladite barrette de rigidification s'étendant suivant la direction transversale.

Le volet externe ou volet froid selon l'invention comprend un nombre de pièces constitutives inférieur au nombre utilisé jusqu'ici, ce qui permet de réduire significativement la masse globale en extrémité de tuyère. En outre, la simplification de conception du volet de l'invention n'entraîne pas de baisse de performances du volet. En effet, le corps de volet assure la fonction aérodynamique nécessaire à la canalisation et au guidage du flux secondaire ou de refroidissement. La forme en oméga dans la deuxième portion correspondant à l'extrémité libre du volet formant un bord de fuite de la tuyère permet de conférer au volet une raideur longitudinale. Par ailleurs, la barrette de rigidification assure une jonction rigide suivant la direction transversale entre les parties aplaties correspondant aux extrémités transversales du raidisseur en oméga. Cela confère au volet une bonne tenue dynamique en empêchant toute déformation du raidisseur (suppression du battement des parties aplaties) sous l'effet de chargements aérodynamiques.

Selon une caractéristique particulière de l'invention, le volet comprend en outre deux chapes amont en forme de U fixées sur la première portion du corps de volet du côté de la face interne dudit corps de volet et une chape aval en forme de U fixée sur la barrette de rigidification.

Selon une autre caractéristique particulière de l'invention, le corps de volet est en matériau composite à matrice céramique. Dans ce cas, la barrette de rigidification est de préférence en matériau composite à matrice céramique afin d'éviter des dilatations différentielles entre le corps du volet et la barrette de rigidification.

Selon une autre caractéristique particulière de l'invention, le corps de volet est en matériau métallique.

L'invention a également pour objet une tuyère à section variable pour arrière-corps de moteur aéronautique comprenant une série de volets internes et une série de volets externes selon l'invention, le mouvement des volets externes étant synchronisé sur le mouvement des volets internes par des biellettes.

L'invention concerne encore un moteur aéronautique comprenant un arrière-corps équipé d'une tuyère à section variable selon l'invention et un aéronef comprenant au moins un tel moteur.

### Brève description des dessins

[Fig. 1] La figure 1 est une vue schématique en perspective de face externe d'un volet externe conformément à un mode de réalisation de l'invention,
[Fig. 2] La figure 2 est une vue schématique en perspective de face interne d'un volet externe conformément à un mode de réalisation de l'invention,
[Fig. 3] La figure 3 est une vue en coupe transversale d'une première portion du volet de la figure 1,
[Fig. 4] La figure 4 est une vue en coupe transversale d'une deuxième portion du volet de la figure 1,
[Fig. 5] La figure 5 est une vue en coupe radiale d'une tuyère à section variable équipée du volet externe des figures 1 à 4.

### Description des modes de réalisation

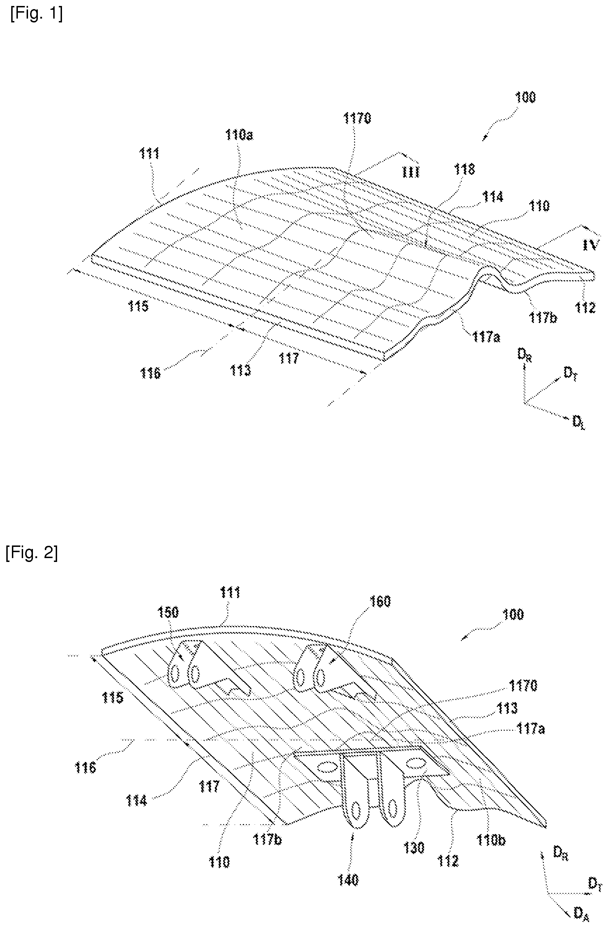

Les figures 1, 2, 3 et 4 montrent un volet externe ou volet froid destiné à être monté de manière articulée sur une tuyère à section variable d'un arrière-corps de turboréacteur selon un mode de réalisation de l'invention.

Le volet 100 comprend un corps de volet 110 s'étendant, suivant une direction longitudinale D_{L} correspondant à la direction axiale de la tuyère à section variable, entre un bord amont 111 et un bord aval 112 destiné à délimiter un bord de fuite de la tuyère d'arrière-corps sur laquelle il est monté. Le corps de volet 110 s'étend également, suivant une direction transversale D_{T} correspondant à la direction circonférentielle de la tuyère à section variable, entre des premier et deuxième bords transversaux 113 et 114. Le corps de volet 110 comporte une face externe 110a montrée en figure 1 et une face interne 110b montrée en figure 2.

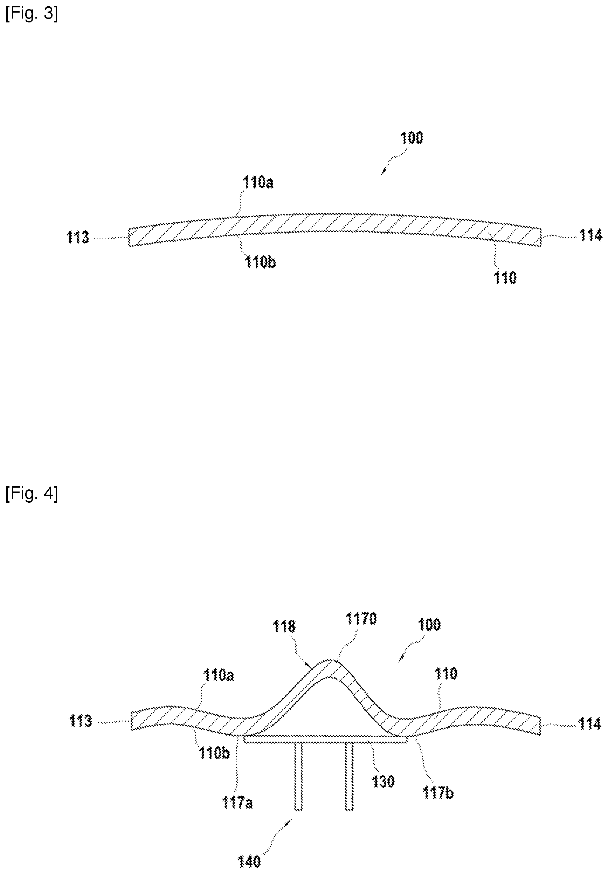

Le corps de volet 110 comprend une première portion 115 qui s'étend suivant la direction longitudinale D_{L} entre le bord amont 111 et une position intermédiaire 116 comprise entre les bords amont 111 et aval 112 du corps de volet et suivant la direction transversale D_{T} entre les bords transversaux 113 et 114. Comme illustrée sur la figure 3, la première portion présente en section transversale une forme en arc de cercle correspondant sensiblement à la courbure du carter externe de la tuyère à l'extrémité duquel le volet 100 est destiné à être positionné.

Conformément à l'invention, le corps de volet 110 comprend en outre une deuxième portion 117 s'étendant suivant la direction longitudinale D_{L} entre la position intermédiaire 116 et le bord aval 112 du corps de volet et suivant la direction transversale D_{T} entre les bords transversaux 113 et 114. Comme illustrée sur les figures 1 et 4, la deuxième portion 117 présente en section transversale une forme générale en oméga. La partie centrale 1170 de la deuxième portion s'élève progressivement suivant une direction radiale D_{R} à partir de la position intermédiaire 116 où sa hauteur est minimale et jusqu'au bord aval 112 par rapport où sa hauteur est maximale. La partie centrale 1170 définit ainsi un raidisseur 118 dans la deuxième portion. La deuxième portion 117 comprend en outre des première et deuxième parties aplaties 117a et 117b adjacentes au raidisseur 118.

La forme en oméga dans la deuxième portion correspondant à l'extrémité libre du volet 100 destiné à former le bord de fuite de la tuyère. La présence du raidisseur 118 permet de conférer au volet une rigidité longitudinale apte à supporter les charges auxquelles le volet est soumis en fonctionnement.

Toujours conformément à l'invention et comme illustrée sur les figures 2 et 4, une barrette de rigidification 130 est fixée sur les première et deuxième parties aplaties 117a et 117b du côté de la face interne 110b du corps de volet 110, la barrette de rigidification 130 s'étendant suivant la direction transversale D_{T}. La barrette de rigidification 130 assure une jonction rigide suivant la direction transversale entre les parties aplaties 117a et 117b correspondant aux extrémités transversales du raidisseur 118 en oméga. Cela confère au volet une bonne tenue dynamique en empêchant toute déformation du raidisseur 118 (suppression du battement des parties aplaties) sous l'effet de chargements aérodynamiques.

Une chape aval en forme de U 140 est fixée sur la barrette de rigidification 130. La chape aval 140 est destinée à être reliée à une biellette de synchronisation de mouvement avec des volets internes ou volets chauds d'une tuyère à section variable.

Le volet 100 comprend également des première et deuxième chapes amont en forme de U 150 et 160 fixées sur le corps de volet 110 au voisinage du bord amont 111. Les chapes amont 150 et 160 sont destinées à être reliées à une extrémité aval d'un carter externe d'une tuyère à section variable.

Le corps de volet 110 peut être réalisé en matériau métallique ou en matériau composite à matrice céramique (CMC). Les matériaux CMC supportent des températures allant de 600°C à 1400°C.Dans le cas d'un matériau métallique, la barrette de rigidification 130, la chape aval 140 et les chapes amont 150 et 160 sont également réalisées en matériau métallique. La barrette de rigidification 130 et les chapes amont 150 et 160 sont fixées sur la face interne 110b du corps de volet 110 par des rivets ou des liaisons boulonnées (non représentés sur la figure 2). La chape aval 140 peut être fixée sur la barrette de rigidification 130 par des rivets, des liaisons boulonnées ou par brasage.

Dans le cas d'un matériau CMC, le corps de volet 110 comprend un renfort fibreux en fibres de carbone ou de carbure de silicium (SiC) et une matrice au moins partiellement céramique telle qu'une matrice de SiC. La fabrication du corps de volet débute par la fabrication d'une ébauche fibreuse par tissage tridimensionnel (3D) réalisé de façon connue au moyen d'un métier à tisser de type jacquard sur lequel on a disposé un faisceau de fils de chaînes en une pluralité de couches, les fils de chaînes étant liés par des fils de trame. Pour le tissage de l'ébauche fibreuse, on peut utiliser des fils en fibres céramique, par exemple des fils en fibres SiC tels que ceux commercialisés par la société japonaise Nippon Carbon sous la dénomination "Hi-Nicalon S", ou des fils en fibres de carbone. Le tissage peut être de type interlock. D'autres armures de tissage tridimensionnel peuvent être utilisées comme par exemple des armures multi-toile ou multi-satin. On pourra se référer au document WO 2006/136755.

Une fois l'ébauche fibreuse tissée, on procède à la découpe du contour de l'ébauche et à sa mise en forme de manière à obtenir une préforme fibreuse ayant une forme voisine de celle du corps de volet à réaliser.

On procède ensuite à la densification de la préforme fibreuse afin de former un corps de volet en matériau CMC. La densification de la préforme fibreuse destinée à former le renfort fibreux du corps de volet à fabriquer consiste à combler la porosité de la préforme, dans tout ou partie du volume de celle-ci, par le matériau constitutif de la matrice. Cette densification peut être réalisée de façon connue en soi suivant le procédé par voie liquide (CVL) ou le procédé par voie gazeuse (CVI), ou le procédé d'injection de charge céramique (Slurry Cast) ou le procédé d'imprégnation d'un alliage de silicium (MI ou RMI) ou encore suivant un enchaînement d'un ou plusieurs de ces procédés.

Le procédé par voie liquide consiste à imprégner la préforme par une composition liquide contenant un précurseur du matériau de la matrice. La préforme est placée dans un moule pouvant être fermé de manière étanche avec un logement ayant la forme de l'aube finale moulée. Ensuite, on referme le moule et on injecte le précurseur liquide de matrice (par exemple une résine) dans tout le logement pour imprégner toute la partie fibreuse de la préforme.

La transformation du précurseur en matrice, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser.

Dans le cas de la formation d'une matrice céramique, le traitement thermique consiste à pyrolyser le précurseur pour transformer la matrice en une matrice céramique selon le précurseur utilisé et les conditions de pyrolyse. A titre d'exemple, des précurseurs liquides de céramique, notamment de SiC ou SiCN, peuvent être des résines de type polycarbosilane (PCS) ou polytitanocarbosilane (PTCS) ou polysilazane (PSZ). Plusieurs cycles consécutifs, depuis l'imprégnation jusqu'au traitement thermique, peuvent être réalisés pour parvenir au degré de densification souhaité.

La densification de la préforme peut encore être réalisée par imprégnation de polymère et pyrolyse (PIP), ou par imprégnation d'une barbotine (« slurry cast »), contenant par exemple du SiC et des liants organiques, suivie d'une infiltration avec du silicium liquide (« Melt infiltration »).

La densification de la préforme fibreuse peut-être également réalisée, de façon connue, par voie gazeuse par infiltration chimique en phase vapeur de la matrice (CVI). La préforme fibreuse correspondant au renfort fibreux du corps de volet à réaliser est placée dans un four dans lequel est admise une phase gazeuse réactionnelle. La pression et la température régnant dans le four et la composition de la phase gazeuse sont choisies de manière à permettre la diffusion de la phase gazeuse au sein de la porosité de la préforme pour y former la matrice par dépôt, au cœur du matériau au contact des fibres, d'un matériau solide résultant d'une décomposition d'un constituant de la phase gazeuse ou d'une réaction entre plusieurs constituants, contrairement aux conditions de pression et températures propres aux procédés CVD ("Chemical Vapor Deposition") qui conduisent exclusivement à un dépôt à la surface du matériau.

La formation d'une matrice SiC peut être obtenue avec du méthyltrichlorosilane (MTS) donnant du SiC par décomposition du MTS.

Une densification combinant voie liquide et voie gazeuse peut être également utilisée pour faciliter la mise en œuvre, limiter les coûts et les cycles de fabrication tout en obtenant des caractéristiques satisfaisantes pour l'utilisation envisagée.

Après densification, on obtient le corps de volet 110 en matériau CMC.

Lorsque le corps de volet 110 est réalisé en matériau CMC, la barrette de rigidification 130 est également réalisée en matériau CMC. Cela permet d'éviter des dilatations différentielles entre le corps de volet et la barrette. Si la barrette de rigidification était en matériau métallique, des dilatations différentielles apparaîtraient lors des montées en températures entre le corps de volet en CMC et la barrette en matériau métallique en raison de la différence de coefficient de dilatation entre les deux matériaux entrainant ainsi des contraintes thermomécaniques dans le volet.

Dans le cas d'un corps de volet et d'une barrette de rigidification en CMC, les chapes métalliques sont fixées au corps de volet ou à la barrette de rigidification par des liaisons ou assemblages boulonnés, comportant des douilles ou rondelles coniques de compensation thermique, afin de conserver la tension d'assemblage, quelle que soit la température de fonctionnement.

Dans le cas d'un corps de volet et d'une barrette de rigidification en matériau métallique, les liaisons ou assemblages sont boulonnés, sans systèmes de compensation thermique puisque les matériaux se dilatent de la même manière (pas de différence de coefficient de dilatation).

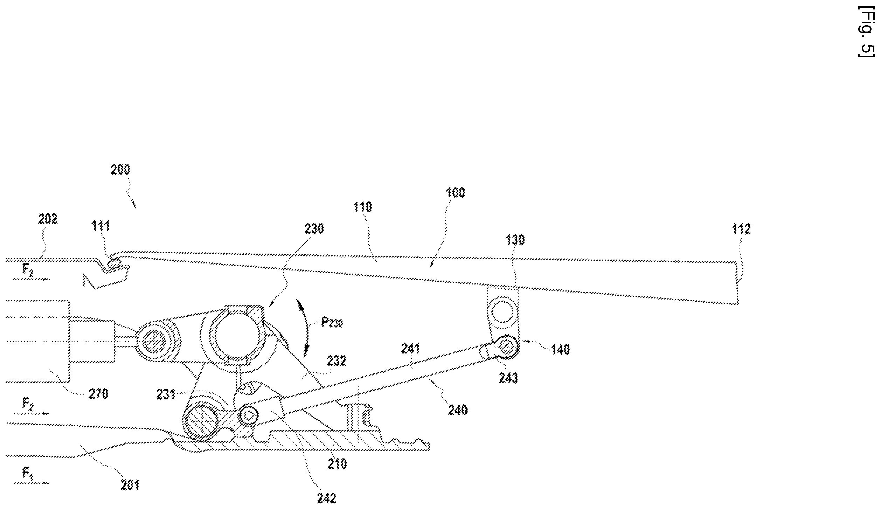

La figure 5 illustre une tuyère à section variable 200 d'un arrière-corps de moteur aéronautique ou turboréacteur à double flux équipée de volets froids ou volets externes selon l'invention. Plus précisément, la tuyère à section variable 200 comprend un carter interne 201 canalisant un flux F₁ correspondant au flux primaire ou flux chaud issu de la chambre de combustion du moteur. La tuyère comprend également un carter externe 202 formant avec le carter primaire un canal de circulation d'un flux F₂ correspondant au flux secondaire ou flux froid issu de la soufflante du moteur.

La tuyère 200 comprend en outre une série de volets mobiles internes ou volets chauds 210, une série de volets mobiles externes ou volets froids 100 correspondant au volet externe 100 décrit précédemment, un levier de commande 230 relié, d'une part, à un actionneur de type vérin 270 et, d'autre part, à plusieurs volet interne 210. La figure 5 étant une vue partielle de la tuyère 100, seul un volet interne 210, un volet externe 100 et un levier de commande 230 sont représentés sur la figure 5. La tuyère est bien entendu composée d'une couronne de volets internes 210 et d'une couronne de volets externes 100 et d'une pluralité de leviers de commande 230 répartis de manière annulaire entre les volets internes 210 et externes 100. Le levier de commande 230 est relié au volet interne 210 par des premier bras 231 et des deuxième bras 232. Sous l'effet de l'actionneur 270, le levier de commande 230 pivote dans la double direction P230 indiquée sur la figure 5, le volet interne 210 relié au levier 230 pivotant alors dans la même direction afin de modifier (réduire ou agrandir) la section d'éjection de la tuyère 200. Comme représenté sur la figure 5, le volet externe 100 est relié au levier de commande 230 par une biellette 240. La biellette 240 comprend une tige 241 comportant à ses deux extrémités respectivement une première tête 242 et une deuxième tête 243. La première tête 242 est reliée au levier de commande 230 par une liaison mobile 250 tandis que la deuxième tête 243 est reliée au volet mobile externe 100 par la chape aval 140 dudit volet. La biellette 240 assure la synchronisation des mouvements entre le volet interne 210 et le volet externe 100 auxquels elle est reliée en transmettant au volet externe 100 les mouvements de pivotements du levier interne 210 commandés par le levier 230.

## Revendications

1. Volet externe ou volet froid (100) de tuyère à section
variable (200) d'arrière-corps de moteur aéronautique comprenant un corps de volet (110) s'étendant suivant une direction longitudinale (D_{L}) entre un bord amont (111) et un bord aval (112) délimitant un bord de fuite de la tuyère d'arrière-corps et suivant une direction transversale (D_{T}) entre des première et deuxième bords transversaux (113, 114), le corps de volet (110) comprenant une première portion (115) s'étendant suivant la direction longitudinale entre le bord amont (111) et une position intermédiaire (116) comprise entre les bords amont et aval dudit corps de volet,
**caractérisé en ce que** le corps de volet (110) comprend en outre une deuxième portion (117) s'étendant suivant la direction longitudinale (D_{L}) entre la position intermédiaire (116) et le bord aval (112) du corps de volet, **en ce que** la deuxième portion (117) présente en section transversale une forme générale en oméga définissant un raidisseur (118) dans la partie centrale de la deuxième portion et des première et deuxième parties aplaties (117a, 117b) adjacentes au raidisseur, et **en ce qu'**une barrette de rigidification (130) est fixée sur lesdites première et deuxième parties aplaties du côté de la face interne (110b) du corps de volet (110), ladite barrette de rigidification s'étendant suivant la direction transversale (D_{T}).

2. Volet selon la revendication 1, comprenant en outre deux chapes amont en forme de U (150, 160) fixées sur la première portion (115) du corps de volet (110) du côté de la face interne (110b) dudit corps de volet et une chape aval en forme de U (140) fixée sur la barrette de rigidification (130).

3. Volet selon la revendication 1 ou 2, dans lequel le corps de volet (110) est en matériau composite à matrice céramique.

4. Volet selon la revendication 3, dans lequel la barrette de rigidification (130) est en matériau composite à matrice céramique.

5. Volet selon la revendication 1 ou 2, dans lequel le corps de volet (110) est en matériau métallique.

6. Tuyère à section variable (200) pour arrière-corps de moteur aéronautique comprenant une série de volets internes (210) et une série de volets externes (110) selon l'une quelconque des revendications 1 à 5, le mouvement des volets externes étant synchronisé sur le mouvement des volets internes par des biellettes (240).

7. Moteur aéronautique comprenant un arrière-corps équipé d'une tuyère à section variable (200) selon la revendication 6.

8. Aéronef comprenant au moins un moteur selon la revendication 7.

## Patentansprüche

1. Externe Klappe oder Kaltklappe (100) einer heckseitigen Düse (200) mit variablem Querschnitt eines Luftfahrzeugtriebwerks, umfassend einen Klappenkörper (110), der sich entlang einer Längsrichtung (D_{L}) zwischen einer stromaufwärtigen Kante (111) und einer stromabwärtigen Kante (112), die eine Hinterkante der heckseitigen Düse begrenzt, und entlang einer Querrichtung (D_{T}) zwischen ersten und zweiten Querkanten (113, 114) erstreckt, wobei der Klappenkörper (110) einen ersten Abschnitt (115) umfasst, der sich entlang der Längsrichtung zwischen der stromaufwärtigen Kante (111) und einer Zwischenposition (116) zwischen den stromaufwärtigen und stromabwärtigen Kanten des Klappenkörpers erstreckt,
**dadurch gekennzeichnet, dass** der Klappenkörper (110) ferner einen zweiten Abschnitt (117) umfasst, der sich entlang der Längsrichtung (D_{L}) zwischen der Zwischenposition (116) und der stromabwärtigen Kante (112) des Klappenkörpers erstreckt, dass der zweite Abschnitt (117) im Querschnitt eine allgemeine Omega-Form aufweist, die einen Stützbalken (118) in dem mittleren Teil des zweiten Abschnitts und erste und zweite abgeflachte Teile (117a, 117b), die an den Stützbalken angrenzend sind, definiert, und dass ein Versteifungssteg (130) an den ersten und zweiten abgeflachten Teilen auf der Seite der Innenseite (110b) des Klappenkörpers (110) befestigt ist, wobei sich der Versteifungssteg entlang der Querrichtung (D_{T}) erstreckt.

2. Klappe nach Anspruch 1, ferner umfassend zwei U-förmige Bügel (150, 160), die an dem ersten Abschnitt (115) des Klappenkörpers (110) auf der Seite der Innenseite (110b) des Klappenkörpers (110) befestigt sind, und einen stromabwärtigen U-förmigen Bügel (140), der an dem Versteifungssteg (130) befestigt ist.

3. Klappe nach Anspruch 1 oder 2, wobei der Klappenkörper (110) aus einem keramischen Faserverbundwerkstoff besteht.

4. Klappe nach Anspruch 3, wobei der Versteifungssteg (130) aus einem keramischen Faserverbundwerkstoff besteht.

5. Klappe nach Anspruch 1 oder 2, wobei der Klappenkörper (110) aus einem metallischen Werkstoff besteht.

6. Düse (200) mit variablem Querschnitt für ein Heckteil eines Luftfahrzeugtriebwerks, umfassend eine Reihe von Innenklappen (210) und eine Reihe von Außenklappen (110) nach einem der Ansprüche 1 bis 5, wobei die Bewegung der Außenklappen mit der Bewegung der Innenklappen durch Schwingarme (240) synchronisiert ist.

7. Luftfahrzeugtriebwerk, umfassend ein Heckteil, das mit einer Düse (200) mit variablem Querschnitt nach Anspruch 6 ausgestattet ist.

8. Luftfahrzeug, umfassend mindestens ein Triebwerk nach Anspruch 7.

## Claims

1. An outer flap or cold flap (100) of a variable-section nozzle (200) for an aeronautical engine afterbody, comprising a flap body (110) extending along a longitudinal direction (D_{L}) between an upstream edge (111) and a downstream edge (112) delimiting a trailing edge of the afterbody nozzle and along a transverse direction (D_{T}) between first and second transverse edges (113, 114), the flap body (110) comprising a first portion (115) extending along the longitudinal direction between the upstream edge (111) and an intermediate position (116) comprised between the upstream and downstream edges of said flap body,
**characterized in that** the flap body (110) further comprises a second portion (117) extending along the longitudinal direction (D_{L}) between the intermediate position (116) and the downstream edge (112) of the flap body, **in that** the second portion (117) has in cross-section a general omega shape defining a stiffener (118) in the central part of the second portion, and first and second flattened parts (117a, 117b) adjacent to the stiffener, and **in that** a stiffening bar (130) is fixed on said first and second flattened parts on the side of the inner face (110b) of the flap body (110), said stiffening bar extending along the transverse direction (D_{T}).

2. The flap according to claim 1, further comprising two U-shaped upstream clevises (150, 160) fixed to the first portion (115) of the flap body (110) on the side of the inner face (110b) of said flap body, and a U-shaped downstream clevis (140) fixed to the stiffening bar (130).

3. The flap according to claim 1 or 2, wherein the flap body (110) is made of a ceramic matrix composite material.

4. The flap according to claim 3, wherein the stiffening bar (130) is made of a ceramic matrix composite material.

5. The flap according to claim 1 or 2, wherein the flap body (110) is made of a metal material.

6. A variable-section nozzle (200) for an aeronautical engine afterbody comprising a series of inner flaps (210) and a series of outer flaps (110) according to any one of claims 1 to 5, the movement of the outer flaps being synchronized with the movement of the inner flaps by means of connecting rods (240).

7. An aeronautical engine comprising an afterbody equipped with a variable-section nozzle (200) according to claim 6.

8. An aircraft comprising at least one engine according to claim 7.
